# EUROPEAN PATENT SPECIFICATION

(11) **EP 2 927 166 B1**
(45) Date of publication and mention of the grant of the patent: **06.12.2017**
(21) Application number: 12818531.1
(22) Date of filing: 31.10.2012
(51) Int. Cl.: B65G 47/20

(54) **DEVICE FOR LOADING OBJECTS**
VORRICHTUNG ZUM LADEN VON ARTIKELN
APPAREIL POUR CHARGER DES OBJETS

(43) Date of publication of application: 07.10.2015
(73) Proprietor: Vanderlande Industries B.V., 5466 RB Veghel (NL)
(72) Inventor: RIGOL DOMINGO, Jordi, I., 08251 Santpedor, Barcelona (ES)
(74) Representative: Algemeen Octrooi- en Merkenbureau B.V.
(86) International application number: PCT/ES2012/070766
(87) International publication number: WO 2014/068150

(56) References cited:
- EP-A1- 0 930 258
- EP-A2- 2 151 402
- GB-A- 703 364
- US-B1- 6 622 849
- US-B2- 8 182 190

## Description

The present invention relates to the field of classification of goods previously to their transportation by means of a container, a truck or a goods train.

The object of the present invention is a device for loading, which has transport means capable of collecting the objects transported by a distribution system.

### Background of the invention

Nowadays devices are known, which are used for loading objects in enclosures such as container, storage rooms, trucks or trains boxes. In the context of the present invention, the term "object" covers any type of element that is susceptible of being loaded in one of such enclosures, either for its storage or for its transportation. Some examples of objects include packets, envelopes, grain, minerals, etc.

Known loading devices are basically formed by a conveyor belt that has a collection end, normally situated in a loading bay, and a front end that can be introduced into the train or truck box. To perform the loading, objects are placed on the collection end of the belt, which transports the objects to the front end where these are unloaded, either automatically or by an operator. Objects that will be loaded arrive through a distribution system, for example, a plurality of sorting conveyor belts, which used to be located in parallel one next to the others. Such a loading device for trucks is known, for example, from EP 2 151 402 A2. Currently, collection of packages from the sorting conveyor belts and their placing on the collection end of the belt can be performed by operators, being this an expensive and time consuming procedure. There are also tipping load devices, whose collection end can describe a rotational movement for collecting objects from several sorting belts. However, the nature of the rotational movement limits the number of sorting belts that this device can cover.

### Description of the invention

The inventors of the present application have designed a loading device that solves the described problems thanks to its lateral displacement capacity, which allows its collection end to be arranged in relation to any position of the distribution system, in such a way that the objects converge at a point on the collection end.

Specifically, the device for loading objects according to the invention comprises transport means, for example a conveyor belt, which has a collection end for receiving the objects of a plurality of sorting belts, being the device laterally movable on guides for arranging said collection end in relation to a desired sorting belt. The guides normally take the form of the rails fixed to the ground; preferably two or more guides are used to move each device. Then, as the movement is lateral instead of rotatory, objects from a virtually unlimited number of sorting belts can be collected, which improves the performance of current devices.

It should be mentioned that the device can operate in automatic or manual modes, which can allow room for the entry of toroids and others. In the embodiment of the invention, the collection end of the conveyor belt further comprises a hopper for collecting objects that allows the unloading of a greater number of objects from the sorting belts. In fact, the hopper allows the accumulation of objects in the hopper before these are transported by the conveyor belt of the device, so it is no longer needed that the sorting belts place the objects one by one.

In principle the hopper may be designed in different ways, however, a preferred embodiment of the invention comprises:
a) A central wall adjacent to the collection end, which is inclined in the longitudinal direction of the conveyor belt. This central wall allows the objects coming from the corresponding sorting belt to slide until they fall on side collection end of the conveyor belt of the device.
b) Two lateral walls adjacent to the lateral sides of the collection end, which are inclined perpendicularly to the longitudinal direction of the conveyor belt. These walls laterally contain the collection end of the conveyor belt of the device, allowing the accumulation of several objects in the hopper; at the same time their inclination forces them to slide downwards in order to be transported by the conveyor belt.

The lateral walls of the hopper, preferably, further comprise top and side flanges to avoid that objects that may be accumulated in the hopper can fall to the ground.

Preferably, both the central wall and the lateral walls exhibit an angle of inclination of between 30° and 60°. This angle is sufficiently inclined to ensure that the objects slide towards the conveyor belt, and at the same time, it is not that inclined, so that the fall can cause damages on the objects, because some of these can be fragile.

In another preferred embodiment of the invention, the hopper may be demounted from the conveyor belt, which allows the device according to the invention to be used in a conventional way, viz. objects are collected from a single sorting belt. For doing that, the lower part of the hopper has mounting plates for fixing it to the device, for example by means of screws or to pressure.

### Brief description of the figures

Fig. 1 shows a plan view of two devices according to the present invention, each of which is movable between two different sorting belts.
Fig. 2 shows a perspective view of a device according to the present invention, where the hopper for collecting objects can be seen.
Fig. 3 shows a perspective view of a collection hopper such as that of Fig. 2.

### Preferred embodiment of the invention

A particular example of the present invention is described with reference to the attached figures where the main parts that form it are shown.

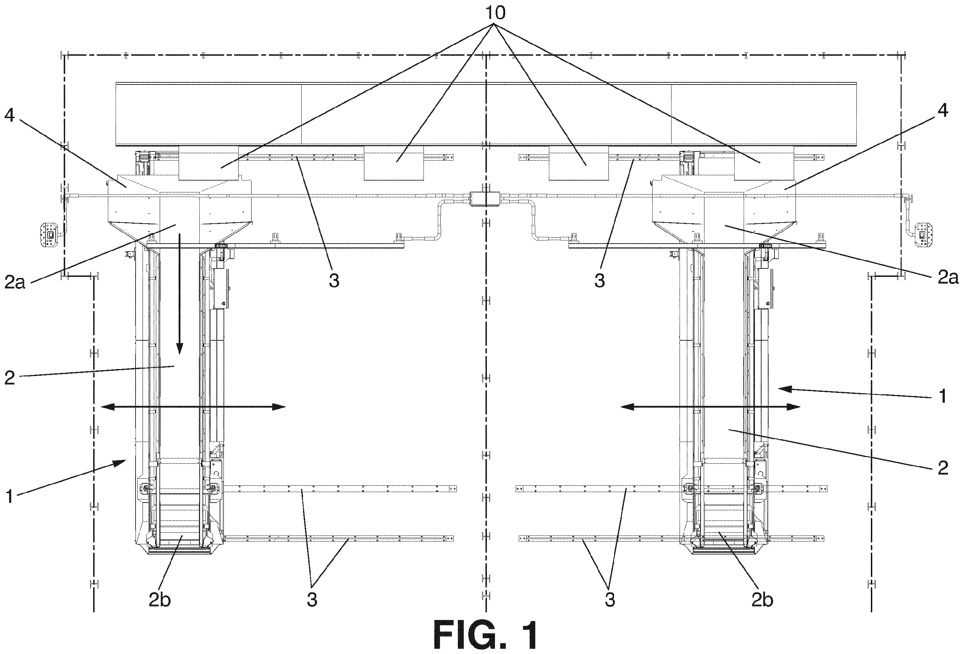

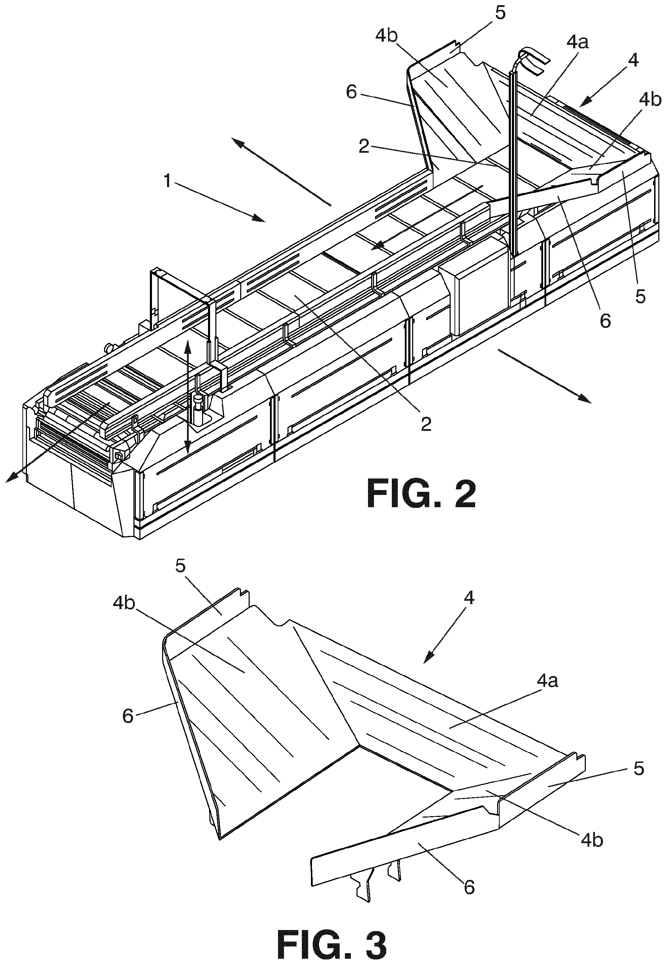

Fig. 1 shows a plan view of an installation formed by two devices (1) for loading objects according to the invention, each of which serves two sorting belts (10). Each device (1) has a conveyor belt (2) that transport the objects from the collection end (2a) to the front end (2b) from which the loading into the trick or similar is performed. The devices (1) move laterally on guides (3) installed on the ground, in this example three guides (3) per device (1). Therefore, by properly synchronizing the movement of the devices (1) and of the sorting belts (10), it is achieved that a single device (1) can collect the objects that are fed from two different belts (10). The device (1) according to the invention further has a hopper (4) for receiving the objects fed from the sorting belts (10). This hopper (4), which can be seen in better detail in Figs. 2 and 3, is essentially formed by two lateral walls (4b) and a central wall (4a). The central wall (4a) is inclined in the direction longitudinal towards the collection end (2a) of the conveyor belt (2), while the lateral walls (4b) are inclined towards the sides of said collection end (2a) in a direction perpendicular to said longitudinal direction. In this way, the objects supplied from the sorting belt (10) fall on the central wall (4a) and slide towards the conveyor belt (2). Moreover, when several objects are supplied from the sorting belt (10), these can accumulate in the hopper (4), which, in order to avoid falls, further has two flanges (5, 6) top and side respectively, situated on the lateral walls (4b).

The hopper (4) is fixed to the device (1) by means of mounting plates (7) that are connected using screws. This way, the hopper (4) may be easily demounted from the device (1) if needed.

Although not seen in the figures, it should be mentioned that the device according to the present invention comprises a counterweight, which is not hung to the structure that moves laterally, but to the extendable structure, simplifying the movable structure.

## Claims

1. Device (1) for loading objects, comprising transport means (2) that have a collection end (2a) for receiving the objects of a plurality of sorting belts(10), wherein the device (1) is laterally movable in order to position the collection end (2a) of the transport means (2) in relation to a desired position of the plurality of sorting belts(10), in such a way that the objects converge at a point on the said collection end (2a), **characterised in that** the collection end (2a) of the transport means (2) comprises one hopper (4) for collecting objects.

2. Device according to claim 1, wherein each device (1) comprises one or more guides (3).

3. Device (1) according to claim 1, wherein the hopper (4) comprises:
- a central wall (4a) adjacent to the collection end **(2a)**, which is inclined in the longitudinal direction of the conveyor belt (2); and
- two lateral walls adjacent to the lateral sides of the collection end (2a), which are inclined perpendicularly to the longitudinal direction of the conveyor belt (2).

4. Device (1) according to claim 3, wherein the angle of inclination of the central (4a) and lateral (4b) walls is of between 30° and 60°.

5. Device (1) according to claims 3 or 4, wherein the lateral walls (4a) comprise a top flange (5) and a side flange (6) to prevent objects from falling.

6. Device (1) according to any of the claims 1-5, wherein the hopper (4) is demountable.

7. Device (1) according to claim 6, wherein the lower part of the hopper (4) comprises mounting plates (7) for fixing it to the device (1).

8. Device (1) according to claim 1, wherein said transport means comprises a conveyor belt (2).

## Patentansprüche

1. Vorrichtung (1) zum Verladen von Gegenständen, mit einer Transporteinrichtung (2), die ein Sammelende (2a) zur Aufnahme der Gegenstände von mehreren Sortierbändern (10) aufweist, wobei die Vorrichtung (1) seitlich bewegbar ist, um das Sammelende (2a) der Transporteinrichtung (2) in Bezug auf eine gewünschte Position der mehreren Sortierbänder (10) in einer solchen Weise zu positionieren, dass sich die Gegenstände an einem Punkt am Sammelende (2a) ansammeln, **dadurch gekennzeichnet, dass** das Sammelende (2a) der Transporteinrichtung (2) einen Füllschacht (4) zum Sammeln von Gegenständen aufweist.

2. Vorrichtung nach Anspruch 1, wobei jede Vorrichtung (1) eine oder mehrere Führungen (3) aufweist.

3. Vorrichtung (1) nach Anspruch 1, wobei der Füllschacht (4) aufweist:
- eine mittlere Wand (4a) angrenzend an das Sammelende (2a), die in Längsrichtung des Förderbands (2) geneigt ist; und
- zwei seitliche Wände angrenzend an die seitlichen Flanken des Sammelendes (2a), die senkrecht zur Längsrichtung des Förderbands (2) geneigt sind.

4. Vorrichtung (1) nach Anspruch 3, wobei der Neigungswinkel der mittleren Wand (4a) und der seitlichen Wände (4b) zwischen 30° und 60° beträgt.

5. Vorrichtung (1) nach den Ansprüchen 3 oder 4, wobei die seitlichen Wände (4a) einen oberen Flansch (5) und einen Seitenflansch (6) aufweisen, um ein Herunterfallen von Gegenständen zu verhindern.

6. Vorrichtung (1) nach einem der Ansprüche 1 bis 5, wobei der Füllschacht (4) abnehmbar ist.

7. Vorrichtung (1) nach Anspruch 6, wobei der untere Teil des Füllschachts (4) Montageplatten (7) aufweist, um ihn an der Vorrichtung (1) zu befestigen.

8. Vorrichtung (1) nach Anspruch 1, wobei die Transporteinrichtung ein Förderband (2) aufweist.

## Revendications

1. Dispositif (1) pour charger des objets, comprenant des moyens de transport (2) qui ont une extrémité de collecte (2a) pour recevoir les objets d'une pluralité de bandes de triage (10), dans lequel
le dispositif (1) est mobile latéralement afin de positionner l'extrémité de collecte (2a) du moyen de transport (2) relativement à une position souhaitée de la pluralité des bandes de triage (10), de telle sorte que les objets convergent en un point sur ladite extrémité de collecte (2a), **caractérisé en ce que**
l'extrémité de collecte (2a) du moyen de transport (2) comprend une trémie (4) pour collecter des objets.

2. Dispositif selon la revendication 1, dans lequel chaque dispositif (1) comprend un ou plusieurs guide(s) (3).

3. Dispositif (1) selon la revendication 1, dans lequel la trémie (4) comprend :
- une paroi centrale (4a) adjacente à l'extrémité de collecte (2a), qui est inclinée dans le sens longitudinal de la bande transporteuse (2); et
- deux parois latérales adjacentes aux côtés latéraux de l'extrémité de collecte (2a), qui sont inclinées perpendiculairement au sens longitudinal de la bande transporteuse (2).

4. Dispositif (1) selon la revendication 3, dans lequel l'angle d'inclinaison de la paroi centrale (4a) et des parois latérales (4b) est compris entre 30° et 60°.

5. Dispositif (1) selon les revendications 3 ou 4, dans lequel les parois latérales (4a) comprennent un rebord supérieur (5) et un rebord latéral (6) pour prévenir la chute d'objets.

6. Dispositif (1) selon l'une des revendications 1 à 5, dans lequel la trémie (4) est démontable.

7. Dispositif (1) selon la revendication 6, dans lequel la partie inférieure de la trémie (4) comprend des plaques de montage (7) pour la fixer au dispositif (1).

8. Dispositif (1) selon la revendication 1, dans lequel ledit moyen de transport comprend une bande transporteuse (2).
